# EUROPEAN PATENT SPECIFICATION

(11) **EP 4 256 484 B1**
(45) Date of publication and mention of the grant of the patent: **04.11.2026**
(21) Application number: 21823872.3
(22) Date of filing: 01.12.2021
(51) Int. Cl.: G06N 10/40

(54) **MULTIMODE RESONATORS FOR RESONATOR INDUCED PHASE GATES**
MULTIMODALE RESONATOREN FÜR RESONATORINDUZIERTE PHASENGATTER
RÉSONATEURS MULTIMODES POUR GRILLES DE PHASE INDUITES PAR UN RÉSONATEUR

(30) Priority: 03.12.2020 US 202017111053
(43) Date of publication of application: 11.10.2023
(73) Proprietor: International Business Machines Corporation, Armonk, New York 10504 (US)
(72) Inventor: KUMPH, Muir, Yorktown Heights, New York 10598 (US); MCKAY, David, Yorktown Heights, New York 10598 (US); DIAL, Oliver, Yorktown Heights, New York 10598 (US)
(74) Representative: IBM Deutschland GmbH
(86) International application number: PCT/EP2021/083835
(87) International publication number: WO 2022/117680

(56) References cited:
- WO-A1-2017/055942
- WO-A1-2018/182584
- US-A1- 2017 091 647
- US-A1- 2020 321 508
- HANHEE PAIK ET AL: "Experimental demonstration of a resonator-induced phase gate in a multi-qubit circuit QED system", ARXIV.ORG, CORNELL UNIVERSITY LIBRARY, 201 OLIN LIBRARY CORNELL UNIVERSITY ITHACA, NY 14853, 2 June 2016 (2016-06-02), XP080705476

## Description

### BACKGROUND

The subject disclosure relates to multimode resonators for enabling a resonator induced phase ("RIP") gate, and more specifically, a qubit coupling structure that includes multiple coupling pathways that can collectively suppress a qubit coupling interaction while a RIP gate is not in operation.

Qubits are coupled within quantum computers to implement various quantum processing operations. Conventionally, qubits are respectively coupled to a common resonator bus, where the frequency of the qubits is far detuned from the frequency of the bus. For example, two coupled qubits can be capacitively coupled to respective ends of a length of co-planar waveguide. Thereby, an all-microwave gate regarding the coupled qubits can be formed. For example, the co-planar waveguide can create an interaction between the qubits, where the frequency of each qubit can depend on the state of the other and exciting the waveguide with a microwave tone can change the degree of frequency change.

Where the qubits are fixed-frequency superconducting qubits (e.g., transmons), a RIP gate can be formed by applying an off-resonant tone to the resonator bus. A signal in the resonator and, therefore, the Stark shift the qubit experience will depend on a joint state of the qubits. To achieve an appreciable RIP entangling rate, a qubit coupling structure that enables a large qubit frequency shift is desired. However, with conventional coupling structures, increasing the amount of qubit frequency shift enabled for the RIP gate also increases an undesirable amount of quantum entanglement between the qubits while the RIP is not active.

The US 2020/321508 A1 refers to superconducting coupling device. The device comprises: a resonator structure, the resonator structure having a first end configured to be coupled to a first device and a second end configured to be coupled to a second device; an electron system coupled to the resonator structure; and a gate positioned proximal to a portion of the electron system, the electron system and the gate configured to interrupt the resonator structure at one or more predetermined locations forming a switch, the gate configured to receive a gate voltage and vary an inductance of the electron system based upon the gate voltage, the varying of the inductance inducing the resonator structure to vary a strength of coupling between the first device and the second device.

The US 2017/091647 A1 refers to s microwave device. The device comprises: a dispersive nonlinear element; a pump resonator, at a first pump resonator end, connected to both the dispersive nonlinear element and a first stub, the pump resonator, at a second pump resonator end, being capacitively coupled to a pump port, wherein the first stub is terminated in an open circuit; and a quantum signal resonator, at a first quantum signal resonator end, connected to both the dispersive nonlinear element and a second stub, the quantum signal resonator, at a second signal resonator end, being capacitively coupled to a signal port, wherein the second stub is connected to ground.

The WO 2018/182584 A1 refers to a quantum integrated circuit assembly. The quantum integrated circuit assembly comprises: a substrate; a plurality of qubits over or in the substrate; and a resonator structure over or in the substrate, the resonator structure comprising: a signal line, anda plurality of periodic conductive elements substantially perpendicular to the signal line.

The WO 2017/055942 A1 refers to a microwave device. The device comprises: a qubit connected to a first end of a first coupling capacitor and a first end of a second coupling capacitor; a resonator connected to a second end of the first coupling capacitor and a second end of the second coupling capacitor, wherein the resonator has a fundamental resonance mode, the fundamental resonance mode having a fundamental resonance mode frequency; and a filter connected to both the qubit and the first end of the first coupling capacitor, the filter and the qubit both being connected together on a same side of the first coupling capacitor, such that both the filter and the qubit are on an opposite side of the first coupling capacitor than the resistor. HANHEE PAIK ET AL: ARXIV.ORG, CORNELL UNIVERSITY LIBRARY, 201 OLIN LIBRARY, CORNELL UNIVERSITY ITHACA, NY 14853, 2 June 2016 (2016-06-02), discloses "Experimental demonstration of a resonator-induced phase gate in a multi-qubit circuit QED system".

### SUMMARY

Technical features of the invention are provided in the appended claims. The following presents a summary to provide a basic understanding of one or more embodiments of the invention. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, apparatuses, devices, and/or systems regarding qubit coupling structures that can enable one or more RIP gates are described.

According to an embodiment, an apparatus is provided. The apparatus comprises a coupling structure coupled to a first qubit and a second qubit. The coupling structure has a plurality of coupling pathways. Additionally, a coupling pathway from the plurality of coupling pathways is a resonator bus. The first qubit is coupled to a first end of the resonator bus, and the second qubit is coupled to a point along a length of the resonator bus. An advantage of such an apparatus can be that a difference between a zero qubit-qubit coupling frequency and a resonance frequency can be controlled based on the second qubit's positioning along the resonator length.

The coupling pathway establishes a resonator induced phase gate between the first qubit and the second qubit. Thereby, the coupling structure can advantageously serve as a RIP quantum logic gate. In other words, the coupling pathway allows for a resonator induced phase gate to be performed between the first qubit and the second qubit. Thereby, the coupling structure is used to perform RIP quantum logic gates.

According to an embodiment, an apparatus is provided. The apparatus comprises a coupling structure coupled to a first qubit and a second qubit. The coupling structure has a plurality of coupling pathways. A coupling pathway from the plurality of coupling pathways is a resonator with a transmission line shunt. Additionally, the coupling pathway establishes an all-microwave, resonator induced phase gate between the first qubit and the second qubit. An advantage of such an apparatus can be that the resonator can exhibit multiple resonance modes.

The plurality of coupling pathways collectively suppress a coupling interaction between the first qubit and the second qubit. An advantage of such an apparatus can be a reduction in undesirable quantum entanglement between the first and second qubits.

According to an embodiment, an apparatus is provided. The apparatus can comprise a quarter wavelength superconducting waveguide capacitively coupled to a first qubit and a second qubit. The quarter wavelength superconducting waveguide can have multiple impedances. An advantage of such an apparatus can be the formation of a multimode resonator coupled to the first and second qubits.

In some examples, the apparatus can further comprise a resonator induced phase gate that can drive the quarter wavelength superconducting waveguide at a first resonator mode from the plurality of resonator modes. Thereby, the resonator-induced phase gate can promote the coupling interaction between the first qubit and the second qubit. An advantage of such an apparatus can be that qubit-qubit coupling when the RIP gate is not operating can be suppressed.

According to an embodiment, an apparatus is provided. The apparatus can comprise a quarter wavelength superconducting waveguide capacitively coupled to a first qubit and a second qubit. The quarter wavelength superconducting waveguide can have multiple impedances. Additionally, the apparatus can comprise a half wavelength superconducting waveguide capacitively coupled to the first qubit and the second qubit. An advantage of such an apparatus can be a coupling structure that can enable a RIP gate for high qubit fidelities.

In some examples, the apparatus can further comprise a superconducting ground connection that can be coupled to, and electrically ground, the quarter wavelength superconducting waveguide. An advantage of such an apparatus can be the enablement of multiple, interfering resonance modes.

According to an embodiment, an apparatus is provided. The apparatus can comprise a quarter wavelength superconducting waveguide capacitively coupled to a first qubit and a second qubit. The quarter wavelength superconducting waveguide can have multiple impedances. Additionally, the apparatus can comprise a direct capacitive coupling between the first qubit and the second qubit. An advantage of such an apparatus can be multiple coupling pathways between the first and second qubits.

In some examples, the quarter wavelength superconducting waveguide can have a first segment between the first qubit and a capacitor, and a second segment between the capacitor and the second qubit. Also, the apparatus can further comprise a superconducting ground connection that can be coupled to, and electrically ground, the first segment. An advantage of such an apparatus, can be a multimode resonator that can enable a RIP gate, where the even and odd resonance modes can exhibit different shapes.

### BRIEF DESCRIPTION OF THE DRAWINGS

FIG. 1 illustrates a diagram of an example, non-limiting first resonator bus topology for enabling a RIP gate between a first qubit and a second qubit in accordance with one or more embodiments described herein.
FIG. 2 illustrates a diagram of an example, non-limiting first microwave circuit that can exemplify the first resonator bus topology in accordance with one or more embodiments described herein.
FIGs. 3A-3B illustrates diagrams, of example, non-limiting graphs that can depict a change in qubit-qubit coupling that can be achieved by the first microwave circuit in accordance with one or more embodiments described herein.
FIG. 4 illustrates a diagram of an example, non-limiting second resonator bus topology for enabling a RIP gate between a first qubit and a second qubit in accordance with one or more embodiments described herein.
FIG. 5 illustrates a diagram of an example, non-limiting second microwave circuit that can exemplify the second resonator bus topology in accordance with one or more embodiments described herein.
FIGs. 6A-6B illustrates diagrams, of example, non-limiting graphs that can depict a change in qubit-qubit coupling that can be achieved by the second microwave circuit in accordance with one or more embodiments described herein.
FIG. 7 illustrates a diagram of an example, non-limiting third resonator bus topology for enabling a RIP gate between a first qubit and a second qubit in accordance with one or more embodiments described herein.
FIG. 8 illustrates a diagram of an example, non-limiting third microwave circuit that can exemplify the third resonator bus topology in accordance with one or more embodiments described herein.
FIG. 9 illustrates a diagram of an example, non-limiting fourth resonator bus topology for enabling a RIP gate between a first qubit and a second qubit in accordance with one or more embodiments described herein.
FIG. 10 illustrates a diagram of an example, non-limiting fourth microwave circuit that can exemplify the first resonator bus topology in accordance with one or more embodiments described herein.
FIG. 11 illustrates a diagram, of example, non-limiting graph that can depict a change in qubit-qubit coupling that can be achieved by the fourth microwave circuit in accordance with one or more embodiments described herein.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Given the problems with other implementations of qubit coupling structures for RIP gates, the present disclosure can be implemented to produce a solution to one or more of these problems by a degenerate multimode resonator for enabling a RIP gate. Various embodiments described herein can regard qubit coupling structures that exhibit multiple resonant modes. Collectively, the multiple resonant modes can interfere with each other to suppress a qubit-qubit coupling interaction. Additionally, the coupling structure can enable a RIP gate via energization of one of the resonant modes to promote the qubit-qubit coupling interaction. Advantageously, quantum entanglement between the qubits can be inhibited when the RIP gate is not in operation.

In one or more embodiments, the qubit-qubit coupling cancellation can be achieved based on the qubits' respective electrical distance along a resonator bus. In various embodiments, the qubit coupling structure can comprise a plurality of coupling pathways, where one of the pathways is a resonator with a transmission line shunt. In some embodiments, one of the coupling pathways can include a quarter wavelength superconducting wave guide, having multiple impedances, capacitively coupled to a first and second qubit. Additionally, a coupling pathway of the qubit coupling structure can include a half wavelength superconducting waveguide capacitively coupled to the qubits. In one or more embodiments, the coupling structure can further include a direct capacitive coupling between the qubits. For instance, a coupling pathway of the qubit coupling structure can include a first segment between a first capacitively coupled qubit and a capacitor, and a second segment between the capacitor and a second capacitively coupled qubit. Additionally, the first and/or second segments can be coupled to a superconducting ground connection. Thereby, a short coupling stub can be established to cause even and odd modes of the resonator to have different shapes, thereby establishing a zero entangling rate at the qubit frequency.

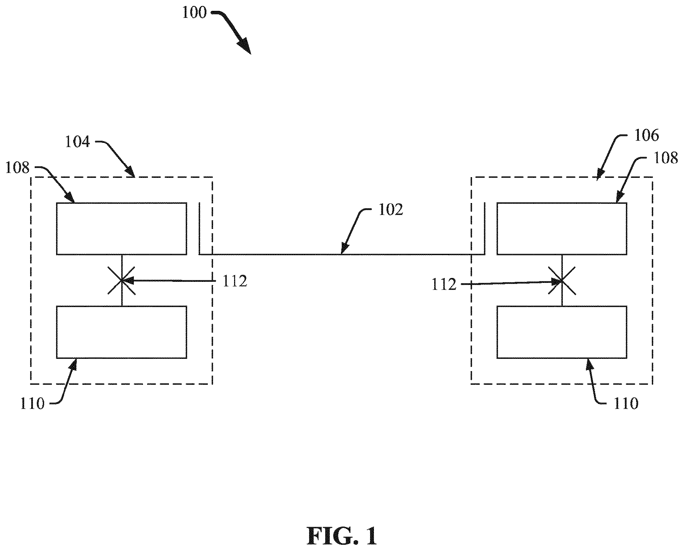

FIG. 1 illustrates a diagram of an example, non-limiting first topology of a qubit coupling structure 100 in accordance with one or more embodiments described herein. Repetitive description of like elements employed in other embodiments described herein is omitted for sake of brevity. As shown in FIG. 1, the qubit coupling structure 100 can include a resonator bus 102 coupled to a first qubit 104 and a second qubit 106. In various embodiments, the qubit coupling structure 100 can enable one or more RIP gates with regards to the first qubit 104 and the second qubit 106.

In one or more embodiments, the first qubit 104 and/or the second qubit 106 can be fixed frequency superconducting qubits, such as transmon qubits. For example, the first qubit 104 and/or the second qubit 106 can comprise a first capacitive pad 108, a second capacitive pad 110, and/or one or more Josephson junctions 112. The first capacitive pads 108 and/or the second capacitive pads 110 can be comprised from one or more superconducting metals. As used herein, the term "superconducting" can characterize a material that exhibits superconducting properties at or below a superconducting critical temperature, such as aluminum (e.g., superconducting critical temperature of 1.2 Kelvin) or niobium (e.g., superconducting critical temperature of 9.3 Kelvin). Additionally, one of ordinary skill in the art will recognize that other superconducting materials (e.g., hydride superconductors, such as lithium/magnesium hydride alloys) can be used in the various embodiments described herein. Example materials that can be comprised within the first capacitive pads 108 and/or the second capacitive pads 110 can include, but are not limited to: aluminum, niobium, tantalum, a combination thereof, and/or the like.

As shown in FIG. 1, one or more Josephson junctions 112 can be located between the first capacitive pad 108 and the second capacitive pad 110 of the respective qubit (e.g., of first qubit 104 and/or second qubit 106). The one or more Josephson junctions 112 can establish a weak link between the superconducting materials via, for example: an insulator material, a normal (e.g., non-superconducting) metal material, a combination thereof, and/or the like. In various embodiments, the one or more Josephson junctions 112 can be characterized by: a superconductor-insulator-superconductor ("SIS") structure, a superconductor-normal metal-superconductor ("SNS") structure, and/or a superconductor-constriction-superconductor ("SCS") structure.

In various embodiments, the resonator bus 102 can be a superconducting transmission line, such as a length of co-planar waveguide. Example materials that can be comprised within the resonator bus 102 can include, but are not limited to: aluminum, niobium, tantalum, a combination thereof, and/or the like. In one or more embodiments, the resonator bus 102 can be capacitively or inductively coupled to the first qubit 104 and/or the second qubit 106. For example, the resonator bus 102 can be capacitively coupled to the first capacitive pad 108 of the first qubit 104 and capacitively coupled to the first capacitive pad 108 of the second qubit 106 (e.g., as shown in the first example topology shown in FIG. 1).

In one or more embodiments, the frequency of the first qubit 104 and/or the second qubit 106 can be far detuned from the frequency of the resonator bus 102. For example, the coupling structure 100 can be characterized by Equation 1 below. $H = {\sum }_{i = 0 , 1} {ω}_{i} {n}_{i} + {g}_{i} \left({a}_{i}+{a}_{i}^{†}\right) \left({b}_{0}+{b}_{0}^{†}\right) + {ω}_{BUS} {b}_{i}^{†} {b}_{i}$ (1) Where " ${g}_{i} \left({a}_{i}+{a}_{i}^{†}\right) \left({b}_{0}+{b}_{0}^{†}\right)$" can be the qubit-bus coupling for each respective qubit (e.g., *"i* = 0" with regards to the first qubit 104, and "*i* = 1" with regards to the second qubit 106), *"gᵢ"* can be the coupling strength of the *i*^{th} qubit to the bus resonator mode, "*ωᵢ*" can be the angular frequency of the *i*^{th} qubit, "*nᵢ*" can be the number operator for the *i*^{th} qubit, and "*ω_{BUS}*" can be the angular frequency of the resonator bus 102 .

In various embodiments, the resonator bus 102 can be passive. For example, the resonator bus 102 can lack photons and can serve as an effective qubit-qubit exchange coupling "*J*", as characterized by Equation 2 below. $J = \frac{{g}_{0} {g}_{1}}{2} \left(\frac{1}{{ω}_{0} - {ω}_{BUS}}+\frac{1}{{ω}_{1} - {ω}_{BUS}}\right)$ (2) Thereby, the resonator bus 102 can enable an all-microwave gate to be performed with regards to the first qubit 104 and the second qubit 106. For example, the qubit coupling structure 100 can enable a RIP gate with regards to the first qubit 104 and the second qubit 106. For instance, a RIP gate enabled by the qubit coupling structure 100 can be a form of a quantum logic gate coupling the superconducting first qubit 104 and second qubit 106. The RIP gate can be an all-microwave multi-qubit entanglement gate that can enable a high degree of flexibility in qubit frequencies. By adiabatically applying and removing an off-resonate pulse to the resonator bus 102, the qubit coupling structure 100 can undergo a closed loop in phase space, after which the resonator bus 102 can be left unchanged while the first qubit 104 and/or second qubit 106 acquire a state-dependent phase.

However, the qubit-qubit coupling "*J*" also establish an entanglement of the first qubit 104 and the second qubit 106 while the RIP gate is not operating, such as a ZZ interaction. For example, the ZZ interaction can be characterized by Equation 3 below. $ZZ = 2 {J}^{2} \left(\frac{1}{{ω}_{0} - {ω}_{1} + {α}_{0}}+\frac{1}{{ω}_{1} - {ω}_{0} + {α}_{1}}\right)$ (3) Where "*α*" can be the anharmonicity of the respective first qubit 104 and/or second qubit 106.

The frequency of the resonator bus 102 can depend on the state of the first qubit 104 and/or the second qubit 106, and the shift of the resonator bus 102 frequency with the qubits in the excited state can characterized in Equation 4 below by "*χ*". ${χ}_{i} = \frac{2 {g}_{i}^{2} {α}_{i}}{{Δ}_{i} \left({Δ}_{i}+{α}_{i}\right)}$ (4) If the first qubit 104 and the second qubit 106 are in the excited state, the frequency of the resonator bus 102 can shift by the sum of the *χ*'s. Further, when a tone is applied to the resonator bus 102 (e.g., detuned from the resonator bus 102), then the signal in the resonator bus 102, and therefore, the Stark shift the first qubit 104 and second qubit 106 experience can depend on the joint state of the qubits. Thereby, a relationship between the *χ* value and the ZZ value can be characterized by Equation 5 below. $ZZ \approx χ \frac{χ}{α} {\left(\frac{α + Δ}{α}\right)}^{2}$ (5)

In conventional coupling structures, increasing the *χ* value to achieve an appreciable RIP gate can result in an undesirable ZZ value. For example, in a conventional coupling structure applying an *α* value of -300 megahertz (MHz) with a Δ value of 1000 MHz can achieve a *χ* value of 10 MHz with a static ZZ value of 2 MHz, where the 10 MHz *χ* value can be desirable but the qubit-qubit entanglement characterized by the 2 MHz ZZ value can render the device inoperable. In various embodiments described herein, the qubit coupling structure 100 can enable a large *χ* value to achieve an appreciable RIP gate, while minimizing the ZZ value to suppress qubit-qubit entanglement when the RIP gate is not operating.

For example, the first example topology (e.g., shown in FIG. 1) of the qubit coupling structure 100 can control the ZZ interaction based on the electrical distance of the first qubit 104 and/or second qubit 106 along the length of the resonator bus 102. For instance, the resonator bus 102 can be a length of half wavelength superconducting co-planar waveguide ("a λ/2 resonator"), where there can be zero qubit-qubit coupling across the resonator bus 102 at ½ the resonance frequency of the resonator bus 102. Setting the first qubit 104 and the second qubit 106 to the ½ frequency can thereby couple the first qubit 104 and the second qubit 106 to the resonator bus 102 but not each other. However, setting the first qubit 104 and the second qubit 106 to the ½ frequency can also inhibit coupling between the respective qubits and the resonator bus 102 because the respective qubits are far detuned from the resonance of the resonator bus 102.

In one or more embodiments, the qubit coupling structure 100 exemplified in the first topology can achieve the zero qubit-qubit entanglement during non-gate operation by adjusting the resonance frequency. For example, the electrical distance of the respective qubits along the length of resonator bus 102 (e.g., λ/2 resonator) can control the difference between the zero qubit-qubit coupling frequency and the resonance frequency. Thereby, by adjusting the positioning of the first qubit 104 and/or the second qubit 106 along the resonator bus 102 (e.g., λ/2 resonator), the zero qubit-qubit coupling frequency can be brought closer to the resonance of the resonator bus 102. For example, additional transmission line length can be added with respect to the first qubit's 104 position along the resonator bus 102 as compared to the second qubit's 106 position along the resonator bus 102.

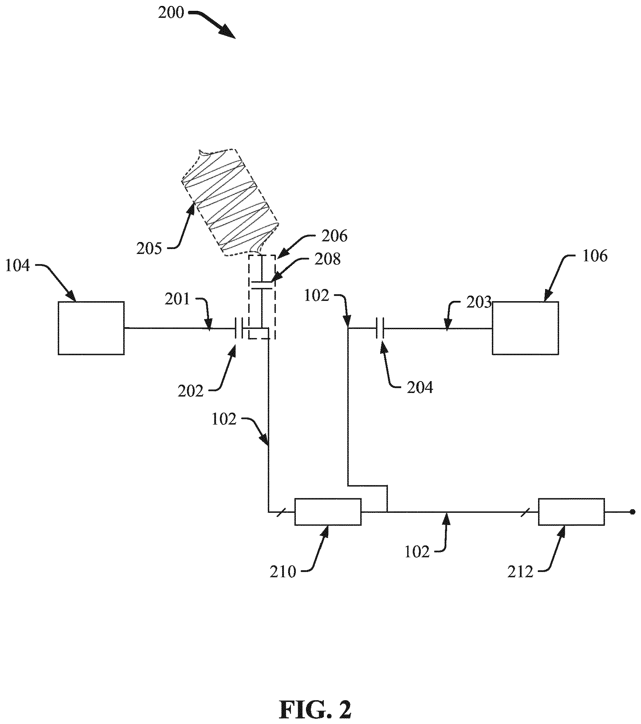

FIG. 2 illustrates a diagram of an example, non-limiting first microwave circuit 200 that can exemplify the first topology shown in FIG. 1 of the qubit coupling structure 100 in accordance with one or more embodiments described herein. Repetitive description of like elements employed in other embodiments described herein is omitted for sake of brevity. As shown in FIG. 2, the first qubit 104 can be coupled to the resonator bus 102 (e.g., a λ/2 resonator) via a first coupling line 201 (e.g., a superconducting transmission line composed of one or more superconducting materials such as aluminum, niobium, and/or tantalum) and/or a first capacitor 202. Also, the second qubit 106 can be coupled to the resonator bus 102 (e.g., a λ/2 resonator) via a second coupling line 203 (e.g., a superconducting transmission line composed of one or more superconducting materials such as aluminum, niobium, and/or tantalum) and/or a second capacitor 204. Additionally, the first microwave circuit 200 can include a driving port 206 capacitively coupled to the resonator bus 102 to drive the RIP gate. For example, photons 205 (e.g., represented by wavelengths in FIG. 2) can be added and/or removed from the resonator bus 102 via the driving port 206. In various embodiments, the driving port 206 can be comprised of the same superconducting material as the resonator bus 102 and can include a third capacitor 208.

Additionally, the resonator bus 102 can comprise a first ideal transmission line element 210 (e.g., a delay-defined ideal transmission line "TLIND") and/or a second ideal transmission line element 212 (e.g., a TLIND). As shown in FIG. 2, the first qubit 104 can have a greater electrical length along the resonator bus 102 than the second qubit 106 at least due to the incorporation of the first TLIND 210. Further, as described above, the difference between the zero qubit-qubit coupling frequency and the qubit-resonator bus coupling frequency of the exemplary first microwave circuit 200 can be based on the additional electrical length associated with the first qubit 104.

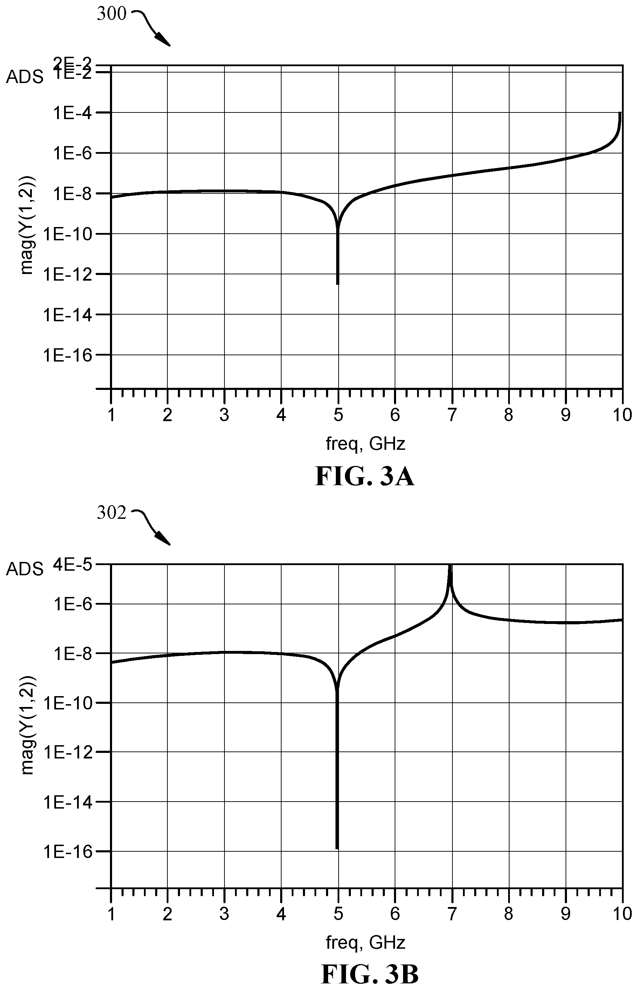

FIGs. 3A-3B illustrates diagrams of example, non-limiting graphs 300, 302 that can demonstrate how the qubit coupling structure 100 exemplified in the topology of FIG. 1 and/or the first microwave circuit 200 of FIG. 2 can achieve a target zero qubit-qubit coupling frequency that enables strong qubit-resonator bus coupling in accordance with one or more embodiments described herein. Repetitive description of like elements employed in other embodiments described herein is omitted for sake of brevity. Graphs 300 and 302 can characterize the first microwave circuit 200, where the second TLIND 212 has Z value (e.g., a ratio of the complex voltage of a give wave to the complex current of the same wave) of 50 ohms and a delay value of 0.35/7 nanoseconds (nsec). Additionally, the scattering parameters can include a start at 1.0 gigahertz (GHz), a stop at 10 GHz, and a step of 0.01 GHz.

Graph 300 characterizes the first microwave circuit 200 without the first TLIND 210, and graph 302 characterizes the first microwave circuit 200 shown in FIG. 2 (e.g., comprising a first TLIND 210 with a Z value of 50 ohms and a delay value of 0.15/7 nsec). As shown in graph 300, the zero qubit-qubit coupling frequency can be at 5 GHz, where the qubit-resonator bus coupling frequency can be at 10 GHz. As shown in graph 302, the added electrical distance provided by the first TLIND 210 can move the qubit-resonator bus coupling frequency to 7 GHz.

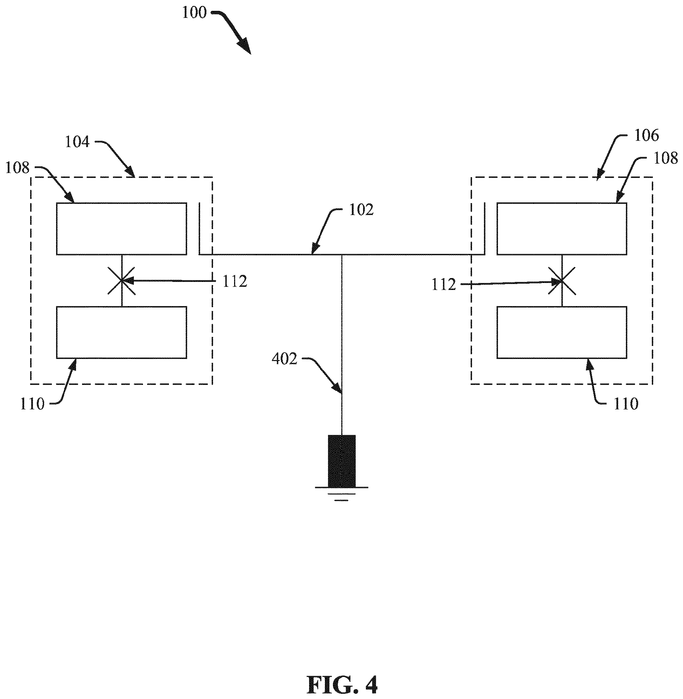

FIG. 4 illustrates a diagram of an example, non-limiting second topology of the qubit coupling structure 100 in accordance with one or more embodiments described herein. Repetitive description of like elements employed in other embodiments described herein is omitted for sake of brevity. In one or more embodiments, the qubit coupling structure 100 can comprise multiple coupling pathways, thereby achieving a degenerate multimode resonator. For example, the *χ* of each respective coupling pathways can be large, but the *J* value can be zero, as characterized by Equation 6 below. $J = {\sum }_{i} \frac{{g}_{0 , i} {g}_{1 , i}}{2} \left(\frac{1}{{f}_{0} - {f}_{BUS , i}}+\frac{1}{{f}_{1} - {f}_{BUS , i}}\right)$ (6) Where "*f*" is the frequency of the resonator bus 102 ("BUS") and/or respective first qubit 104 and second qubit 106 (e.g., *"i=0,* 1"). Thereby, the plurality of resonance modes of the qubit coupling structure 100 can collectively suppress qubit-qubit coupling between the first qubit 104 and the second qubit 106. To operate a RIP gate, the qubit coupling structure 100 (e.g., the resonator bus 102) can be driven at one of the resonance modes to lift the resonance mode sum. For instance, in one or more embodiments, the *g* values associated with the first qubit 104 and the second qubit 106 can be equal, and the multiple coupling pathways can establish a first *χ* value above the qubit frequency (e.g., a positive *χ*) and a second *χ* value below the qubit frequency (e.g., a negative *χ*)*.* Thus, the qubit coupling structure 100 can comprise multiple coupling pathways to achieve multiple resonance modes that collectively suppress qubit-qubit coupling, where one or more of the resonance modes can be energized to drive a RIP gate.

For example, in one or more embodiments the resonator bus 102 can be a quarter wavelength superconducting co-planar waveguide (e.g., a λ/4 resonator) with multiple impedances. Additionally, the qubit coupling structure 100 can include a superconducting transmission line shunt 402. In one or more embodiments, the shunt 402 can be a superconducting ground connection coupled to the resonator bus 102 (e.g., a λ/4 resonator). In various embodiments, the qubit coupling structure 100 can achieve multiple coupling pathways due to at least the shunt 402, and the resonance modes of the multiple coupling pathways can interfere with each other. For example, the multiple resonance modes exhibited by the multiple coupling pathways can substantially cancel each other.

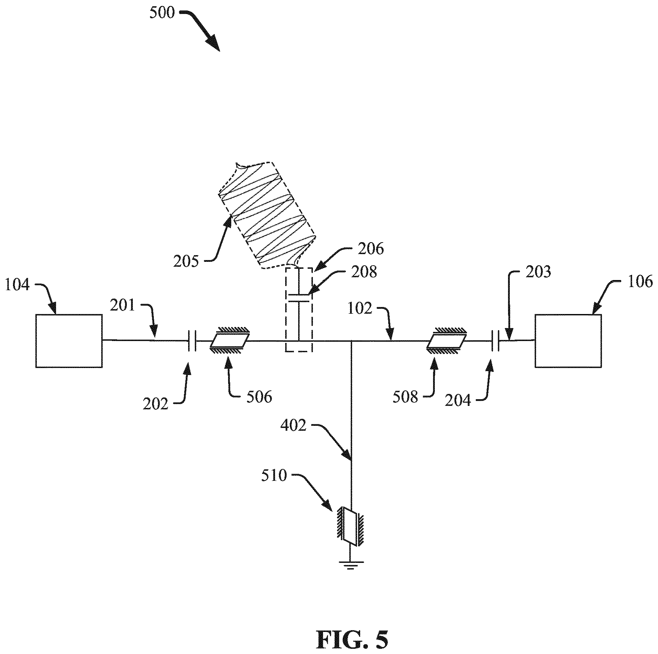

FIG. 5 illustrates a diagram of an example, non-limiting second microwave circuit 500 that can exemplify the second topology shown in FIG. 4 of the qubit coupling structure 100 in accordance with one or more embodiments described herein. Repetitive description of like elements employed in other embodiments described herein is omitted for sake of brevity. As shown in FIG. 5, the first qubit 104 can be coupled to the resonator bus 102 (e.g., a λ/4 resonator) via the first coupling line 201 and/or first capacitor 202. Also, the second qubit 106 can be coupled to the resonator bus 102 (e.g., a λ/4 resonator) via the second coupling line 203 and/or second capacitor 204. Additionally, the exemplary second microwave circuit 500 can include a driving port 206, as described in various embodiments herein.

The resonator bus 102 can include a first co-planar waveguide element 506 and a second co-planar waveguide element 508. Additionally, the shunt 402 can include a third co-planar waveguide element 510. In various embodiments, the first co-planar waveguide element 506 and the second co-planar waveguide element 508 can have a first length ("L1"). Further, the third co-planar waveguide element 510 can have a second length ("L2"), which can be different than L1. For instance, L2 can be less than L1.

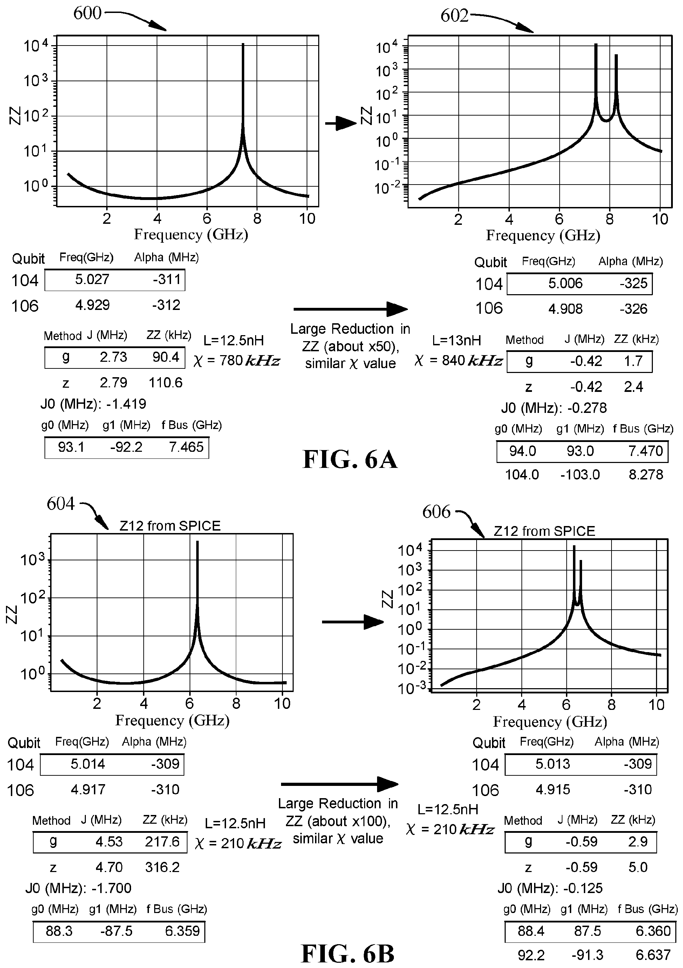

FIGs. 6A-6B illustrates diagrams of example, non-limiting graphs that can demonstrate how the qubit coupling structure 100 exemplified in the topology of FIG. 4 and/or the second microwave circuit 500 of FIG. 5 can achieve multiple interfering resonance modes in accordance with one or more embodiments described herein. Repetitive description of like elements employed in other embodiments described herein is omitted for sake of brevity.

Regarding FIG. 6A, graph 600 can characterize the second microwave circuit 500 absent shunt 402, where L1 equals 4 millimeters (mm). Graph 602 can characterize the second microwave circuit 500, shunt 402 included, where L1 equals 3.6 mm and L2 equals 0.2 mm. Other than the absence/presence of the shunt 402 and the corresponding L1/L2 lengths, the circuit conditions remained consistent between graph 600 and 602. As shown in graph 600, without the shunt 402, the coupling structure can exhibit a single resonance mode. As shown in graph 602, the incorporation of the shunt 402, and thereby multiple coupling pathways, can enable the qubit coupling structure 100 to exhibit multimode resonance. Additionally, the microwave circuit without the shunt 402, and the second microwave circuit 500 can exhibit similar self-inductance (e.g., 12.5 nanoHenry (nH) compared to 13 nH) and *χ* values while reducing the ZZ value.

Regarding FIG. 6B, graph 604 can characterize the second microwave circuit 500 absent shunt 402, where L1 equals 4.7 mm. Graph 606 can characterize the second microwave circuit 500, shunt 402 included, where L1 equals 4.5 mm and L2 equals 0.1 mm. Other than the absence/presence of the shunt 402 and the corresponding L1/L2 lengths, the circuit conditions remained consistent between graph 604 and 606. As shown in graph 606, without the shunt 402, the coupling structure can exhibit a single resonance mode. As shown in graph 606, the incorporation of the shunt 402, and thereby multiple coupling pathways, can enable the qubit coupling structure 100 to exhibit multimode resonance. Additionally, the microwave circuit without the shunt 402, and the second microwave circuit 500 can exhibit equivalent self-inductance (e.g., 12.5 nH) and *χ* values while reducing the ZZ value.

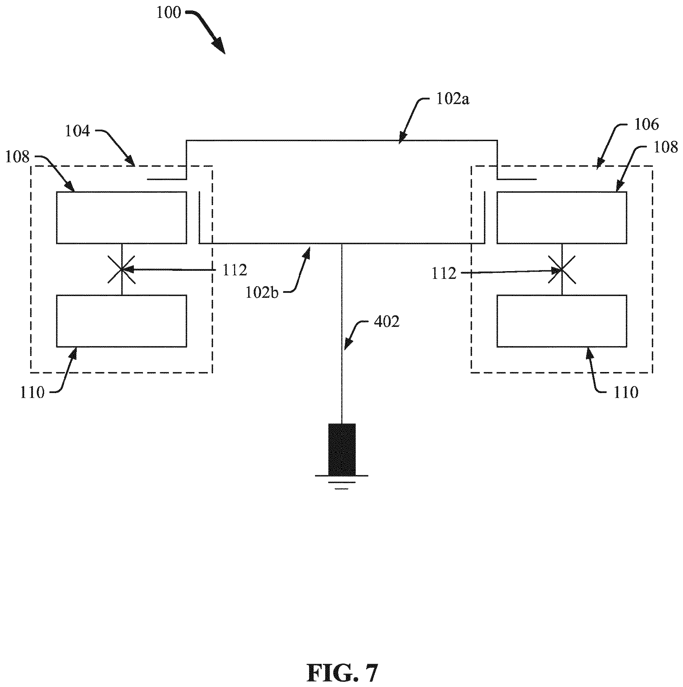

FIG. 7 illustrates a diagram of an example, non-limiting third topology of the qubit coupling structure 100 in accordance with one or more embodiments described herein. Repetitive description of like elements employed in other embodiments described herein is omitted for sake of brevity. In one or more embodiments, various features of the first topology shown in FIG. 1 and the second topology shown in FIG. 4 can be combined. For example, the qubit coupling structure 100 can include multiple embodiments of the resonator bus 102 described herein. For instance, the qubit coupling structure 100 can include a first resonator bus 102a and a second resonator bus 102b capacitively coupled to the first capacitive pad 108 of the first qubit 104 and the first capacitive pad 108 of the second qubit 106.

In various embodiments, the first resonator bus 102a of the third topology of the qubit coupling structure 100 (e.g., shown in FIG. 7) can be a λ/2 resonator. In accordance with the various embodiments described herein, a relationship between the zero qubit-qubit coupling frequency and the resonance frequency of the first resonator bus 102a (e.g., a λ/2 resonator) can depend on the electrical distance of the respective qubits along the first resonator bus 102a. Further, the second resonator bus 102b of the third topology of the qubit coupling structure 100 (e.g. shown in FIG. 7) can be a λ/4 resonator coupled to shunt 402 (e.g., a superconducting ground connection). In accordance with the various embodiments described herein, the L1 and L2 lengths of the second resonator bus 102b and shunt 402 can further influence the development of multiple, interfering resonance modes exhibited by the qubit coupling structure 100.

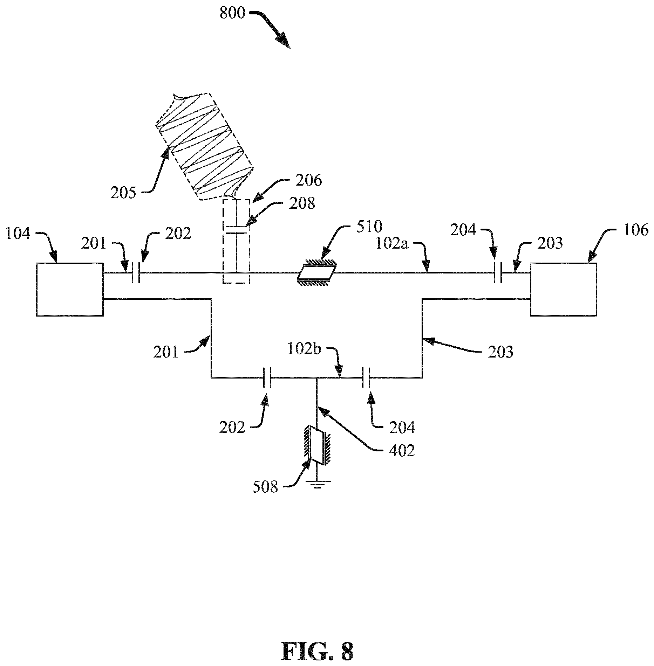

FIG. 8 illustrates a diagram of an example, non-limiting third microwave circuit 800 that can exemplify the third topology shown in FIG. 7 of the qubit coupling structure 100 in accordance with one or more embodiments described herein. Repetitive description of like elements employed in other embodiments described herein is omitted for sake of brevity. In various embodiments, a drive port 206 can be coupled to the first resonator bus 102a and/or the second resonator bus 102b to drive a RIP gate across the qubit coupling structure 100 of the exemplary microwave circuit 800.

As shown in FIG. 8, a first resonator bus 102a can be coupled to the first qubit 104 via one or more first coupling lines 201 and/or first capacitors 202, and a second resonator bus 102b can be coupled to the second qubit 106 via one or more second coupling lines 203 and/or second capacitors 204. The first resonator bus 102a can be a λ/2 resonator with a co-planar waveguide (e.g., a third co-planar waveguide element 510). The second resonator bus 102b can be a λ/4 resonator coupled to a superconducting ground connection, and/or can include another co-planar waveguide (e.g., a second co-planar waveguide element 508). In various embodiments, the co-planar waveguide of the first resonator bus 102a can have a greater length than the co-planar waveguide of the second resonator bus 102b (e.g., the third co-planar waveguide element 510 of the first resonator bus 102a can have a length L3 that is greater than a length L2 the second co-planar waveguide element 508 of the second resonator bus 102b in accordance with various embodiments described herein). For example, the first resonator bus 102a can include a co-planar waveguide with a length of 10 mm, and the second resonator bus 102b can include a co-planar waveguide with a length of 4.5 mm.

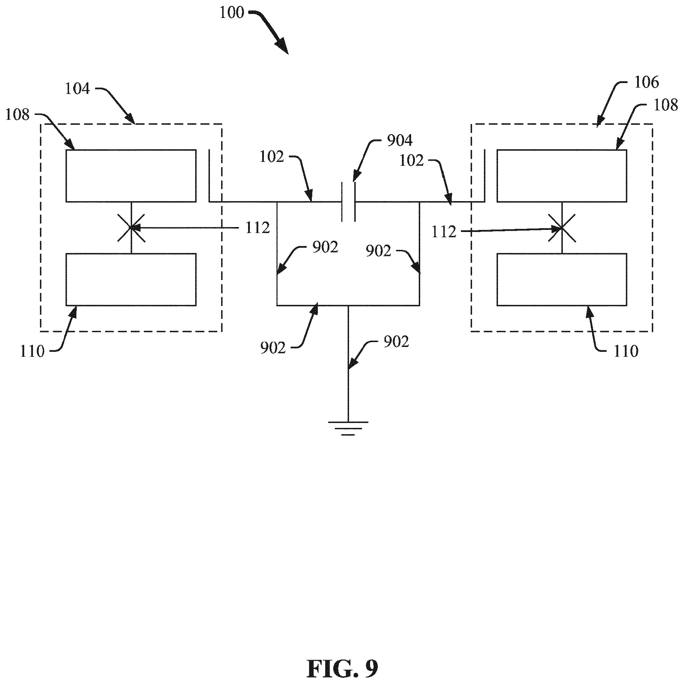

FIG. 9 illustrates a diagram of an example, non-limiting fourth topology of the qubit coupling structure 100 in accordance with one or more embodiments described herein. Repetitive description of like elements employed in other embodiments described herein is omitted for sake of brevity. In one or more embodiments, the qubit coupling structure 100 can include a coupling stub 902 coupled to the resonator bus 102.

As shown in FIG. 9, the resonator bus 102 can include a fourth capacitor 904 that can define a first segment of the resonator bus 102 and a second segment of the resonator bus 102. The first segment can comprise a portion of the resonator bus 102 positioned between the first qubit 104 and the fourth capacitor 904. For example, the first segment can be capacitively coupled to the first qubit 104 and extend to the fourth capacitor 904. The second segment can comprise a portion of the resonator bus 102 positioned between the second qubit 106 and the fourth capacitor 904. For example, the second segment can be capacitively coupled to the second qubit 106 and extend to the fourth capacitor 904. In various embodiments, the resonator bus 102 can be a λ/4 resonator.

The coupling stub 902 can be coupled to the first segment and the second segment of the resonator bus 102. In various embodiments, the coupling stub 902 can be a λ/4 resonator. Further, in one or more embodiments the coupling stub 902 can be a circuit short (e.g., as shown in FIG. 9 by short connection 906). In one or more embodiments, the coupling stub 902 can be a superconducting ground connection.

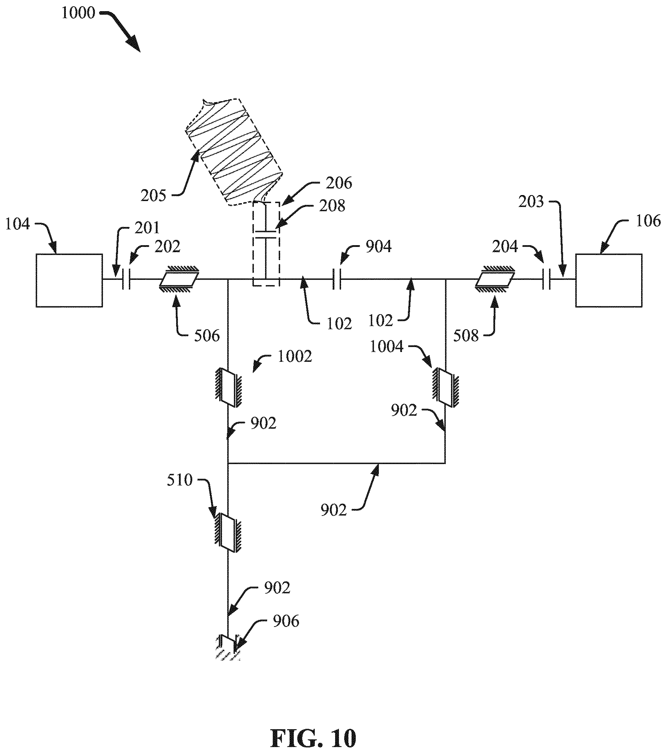

FIG. 10 illustrates a diagram of an example, non-limiting fourth microwave circuit 1000 that can exemplify the fourth topology shown in FIG. 9 of the qubit coupling structure 100 in accordance with one or more embodiments described herein. Repetitive description of like elements employed in other embodiments described herein is omitted for sake of brevity. As shown in FIG. 10, the first qubit 104 can be coupled to the resonator bus 102 (e.g., a λ/4 resonator) via the first coupling line 201 and/or first capacitor 202. Also, the second qubit 106 can be coupled to the resonator bus 102 (e.g., a λ/4 resonator) via the second coupling line 203 and/or second capacitor 204. Additionally, the exemplary second microwave circuit 500 can include a driving port 206, as described in various embodiments herein.

Further, the fourth capacitor 904 can be positioned along the resonator bus 102 between the first capacitor 202 and the second capacitor 204, thereby defining a first segment of the resonator bus 102 (e.g., coupled to the first qubit 104) and a second segment of the resonator bus 102 (e.g., coupled to the second qubit 106). The first segment of the resonator bus 102 can include first co-planar waveguide element 506, and the second segment of the resonator bus 102 can include second co-planar waveguide element 508. In accordance with the various embodiments described herein, the first co-planar waveguide element 506 of the first segment and the second co-planar waveguide element 508 of the second segment can have the same length L1.

In various embodiments, the coupling stub 902 can include a fourth co-planar waveguide element 1002 coupled to the first segment and a fifth co-planar waveguide element 1004 coupled to the second segment. Further, the fourth co-planar waveguide element 1002 and/or the fifth co-planar waveguide element 1004 can be coupled to the third co-planar waveguide element 510 (e.g., which has a different length of L2). Additionally, the fourth co-planar waveguide element 1002 and/or the fifth co-planar waveguide element 1004 can have the same length ("L3"). In one or more embodiments, L3 can be greater than L1 and L2. For example, the length of the co-planar waveguides can be characterized by: L3 > L1 > L2.

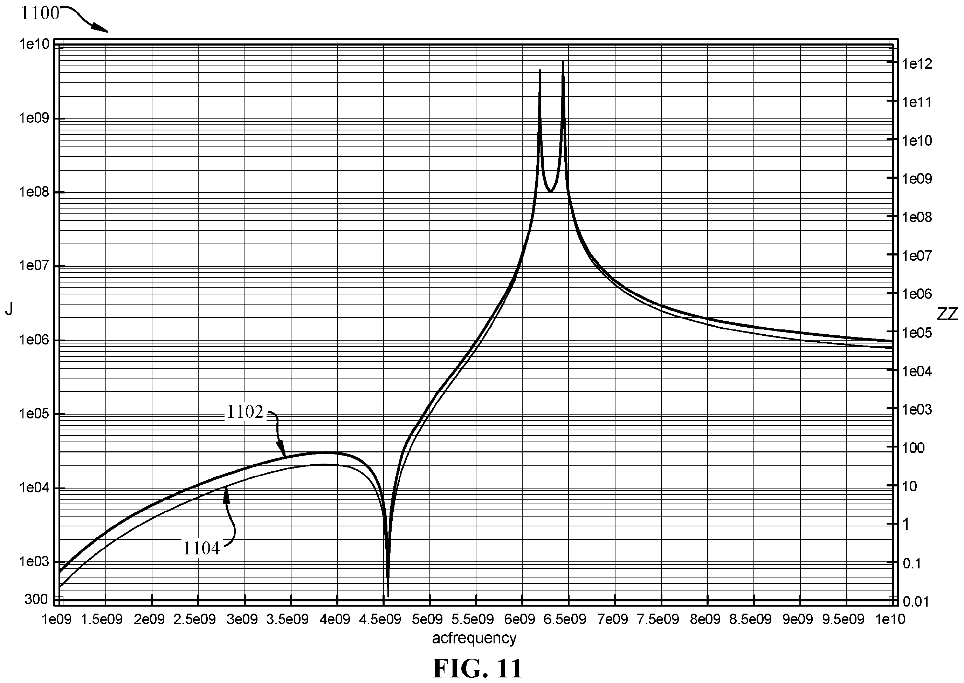

FIG. 11 illustrates a diagram of example, non-limiting graph 1100 that can demonstrate how the qubit coupling structure 100 exemplified in the topology of FIG. 9 and/or the fourth microwave circuit 1000 of FIG. 10 can achieve multiple interfering resonance modes in accordance with one or more embodiments described herein. Repetitive description of like elements employed in other embodiments described herein is omitted for sake of brevity.

As described herein, the fourth qubit coupling structure 100 topology exemplified in FIGs. 9 and 10 can achieve a generate multimode resonator. For example, the qubit coupling structure 100 can have multiple coupling pathways via the resonator bus 102 and/or the coupling stub 902. Further, each of the coupling pathways can exhibit a resonance mode that can interfere with each other. For example, the even and odd resonance modes of the qubit coupling structure 100 shown in FIGs. 9-10 (e.g., a degenerate multimode resonator) can add to substantially cancel a coupling interaction between the first qubit 104 and the second qubit 106 via the fourth capacitor 904. Further, the short coupling stub 902 can cause (e.g., via combination of the third co-planar waveguide element 510, fourth co-planar waveguide element 1002, and/or fourth co-planar waveguide element 1004) the even resonance modes of the qubit coupling structure 100 to have a different shape than the odd resonance modes, thereby giving a zero qubit-qubit coupling at the qubit frequency.

For example, graph 1100 characterizes the exemplary fourth microwave circuit 1000. Line 1102 can characterize the *J* value, and line 1104 can characterize the *ZZ* value. As shown in graph 1100, the qubit coupling structure 100 exhibits two degenerate resonance modes at about 6.2 GHz and 6.5 GHz, split by about 300 megahertz (MHz). Also, shown in graph 1100, the zero qubit-qubit coupling frequency for the exemplary fourth microwave circuit 1000 can be established at about 4.5 GHz. In various embodiments, the ZZ value can be inferred from the *J* value by assuming a 50 MHz delta between the first qubit 104 and the second qubit 106.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

It is, of course, not possible to describe every conceivable combination of components, products and/or methods for purposes of describing this disclosure, but one of ordinary skill in the art can recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim. The descriptions of the various embodiments have been presented for purposes of illustration, but are not intended to be exhaustive or limited to the embodiments disclosed. The terminology used herein was chosen to best explain the principles of the embodiments, the practical application or technical improvement over technologies found in the marketplace, or to enable others of ordinary skill in the art to understand the embodiments disclosed herein.

## Claims

1. An apparatus, comprising:
a coupling structure (100) coupled to a first qubit (104) and a second qubit (106), the coupling structure having a plurality of coupling pathways, wherein a coupling pathway from the plurality of coupling pathways is a resonator bus (102) with a transmission line shunt (402), wherein the plurality of coupling pathways exhibit a plurality of resonance modes that interfere to collectively suppress a coupling interaction between the first qubit and the second qubit,
and wherein the coupling pathway establishes an all-microwave, resonator induced phase gate between the first qubit and the second qubit.

2. The apparatus according to the preceding claim, wherein the transmission line shunt comprises a superconducting ground connection; and/or wherein the first qubit is coupled to a first end of the resonator bus, and wherein the second qubit is coupled to a point along a length of the resonator bus; and/or wherein the resonator bus comprises a quarter wavelength superconducting co-planar waveguide with multiple impedances.

3. An apparatus, comprising:
a coupling structure (100) coupled to a first qubit (104) and a second qubit (106), the coupling structure having a plurality of coupling pathways, wherein a coupling pathway from the plurality of coupling pathways is a resonator bus (102), wherein the first qubit is coupled to a first end of the resonator bus, and wherein the second qubit is coupled to a point along a length of the resonator bus,
wherein the coupling pathway establishes an all-microwave resonator induced phase gate between the first qubit and the second qubit.

4. The apparatus according to any of the preceding claims, wherein the plurality of coupling pathways collectively suppress a coupling interaction between the first qubit and the second qubit; and/or
wherein the first qubit and the second qubit are coupled to the resonator bus via at least one coupling technology selected from the group consisting of capacitive coupling and inductive coupling; and/or
wherein the coupling structure further comprises a driving port (206); and/or
wherein the resonator bus is a passive resonator bus.

5. The apparatus of claim 1:
the coupling structure comprising a quarter wavelength superconducting waveguide (102) capacitively coupled to the first qubit (104) and the second qubit (106), wherein the quarter wavelength superconducting waveguide has multiple impedances; and
wherein the all-microwave, resonator-induced phase gate is configured to drive the quarter wavelength superconducting waveguide at a first resonance mode from the plurality of resonance modes.

6. The apparatus according to the preceding claim, wherein a fundamental resonance of the quarter wavelength superconducting waveguide is below a frequency of the first qubit and a frequency of the second qubit, and wherein the apparatus exhibits the plurality of resonance modes that add to cancel a coupling interaction between the first qubit and the second qubit; and/or
wherein the all-microwave, resonator-induced phase gate promotes the coupling interaction between the first qubit and the second qubit.

7. The apparatus of claim 1:
the coupling structure comprising a quarter wavelength superconducting waveguide (102b) capacitively coupled to the first qubit (104) and the second qubit (106), wherein the quarter wavelength superconducting waveguide has multiple impedances; and
a half wavelength superconducting waveguide (102a) capacitively coupled to the first qubit and the second qubit; and
wherein the all-microwave, resonator-induced phase gate is configured to drive the quarter wavelength superconducting waveguide or the half wavelength superconducting waveguide at a first resonance mode from the plurality of resonance modes.

8. The apparatus according to the preceding claim, further comprising:
a superconducting ground connection (402) that is coupled to, and electrically grounds, the quarter wavelength superconducting waveguide.

9. The apparatus according to the preceding claim, wherein the quarter wavelength superconducting waveguide and the half wavelength superconducting waveguide are both coupled to a first capacitive pad (108) of the first qubit and a first capacitive pad (108) of the second qubit; and/or
wherein the apparatus exhibits the plurality of resonance modes that add to cancel a coupling interaction between the first qubit and the second qubit; and/or
wherein the all-microwave, resonator-induced phase gate promotes the coupling interaction between the first qubit and the second qubit.

10. The apparatus of claim 5, further comprising:
a direct capacitive coupling between the first qubit and the second qubit.

11. The apparatus according to the preceding claim, wherein the quarter wavelength superconducting waveguide has a first segment between the first qubit and a capacitor (904) and a second segment between the capacitor and the second qubit, and wherein the apparatus further comprising a superconducting ground connection that is coupled to, and electrically grounds, the first segment.

12. The apparatus according to the preceding claim, wherein the apparatus exhibits the plurality of resonance modes that add to cancel a coupling interaction between the first qubit and the second qubit.

13. A method comprising:
coupling a coupling structure (100) to a first qubit (104) and a second qubit (106), the coupling structure having a plurality of coupling pathways, wherein a coupling pathway from the plurality of coupling pathways is a resonator bus with a transmission line shunt (402); wherein the plurality of coupling pathways exhibit a plurality of resonance modes that interfere to collectively suppress a coupling interaction between the first qubit and the second qubit; and
establishing an all-microwave, resonator induced phase gate between the first qubit and the second qubit by the coupling pathway.

## Patentansprüche

1. Einrichtung, umfassend:
eine Kopplungsstruktur (100), die an ein erstes Qubit (104) und ein zweites Qubit (106) gekoppelt ist, wobei die Kopplungsstruktur eine Vielzahl von Kopplungspfaden aufweist, wobei ein Kopplungspfad der Vielzahl von Kopplungspfaden ein Resonatorbus (102) mit einem Übertragungsleitungs-Shunt (402) ist, wobei die Vielzahl von Kopplungspfaden eine Vielzahl von Resonanzmoden aufweist, die interferieren, um gemeinsam eine Kopplungsinteraktion zwischen dem ersten Qubit und dem zweiten Qubit zu unterdrücken,
und wobei der Kopplungspfad ein vollständig mikrowellenbasiertes resonatorinduziertes Phasengatter zwischen dem ersten Qubit und dem zweiten Qubit herstellt.

2. Einrichtung nach dem vorstehenden Anspruch, wobei der Übertragungsleitungs-Shunt eine supraleitende Masseverbindung umfasst; und/oder
wobei das erste Qubit an ein erstes Ende des Resonatorbusses gekoppelt ist und wobei das zweite Qubit an einen Punkt entlang einer Länge des Resonatorbusses gekoppelt ist; und/oder
wobei der Resonatorbus einen supraleitenden koplanaren Viertelwellenlängenwellenleiter mit mehreren Impedanzen umfasst.

3. Einrichtung, umfassend:
eine Kopplungsstruktur (100), die an ein erstes Qubit (104) und ein zweites Qubit (106) gekoppelt ist, wobei die Kopplungsstruktur eine Vielzahl von Kopplungspfaden aufweist, wobei ein Kopplungspfad der Vielzahl von Kopplungspfaden ein Resonatorbus (102) ist, wobei das erste Qubit an ein erstes Ende des Resonatorbusses gekoppelt ist und wobei das zweite Qubit an einen Punkt entlang einer Länge des Resonatorbusses gekoppelt ist,
wobei der Kopplungspfad ein vollständig mikrowellenbasiertes resonatorinduziertes Phasengatter zwischen dem ersten Qubit und dem zweiten Qubit herstellt.

4. Einrichtung nach einem der vorstehenden Ansprüche, wobei die Vielzahl von Kopplungspfaden gemeinsam eine Kopplungsinteraktion zwischen dem ersten Qubit und dem zweiten Qubit unterdrücken; und/oder
wobei das erste Qubit und das zweite Qubit über mindestens eine Kopplungstechnologie, die aus der Gruppe bestehend aus kapazitiver Kopplung und induktiver Kopplung ausgewählt ist, mit dem Resonatorbus gekoppelt sind; und/oder
wobei die Kopplungsstruktur weiter einen Ansteueranschluss (206) umfasst; und/oder
wobei der Resonatorbus ein passiver Resonatorbus ist.

5. Einrichtung nach Anspruch 1:
wobei die Kopplungsstruktur einen supraleitenden Viertelwellenlängenwellenleiter (102) umfasst, der kapazitiv an das erste Qubit (104) und das zweite Qubit (106) gekoppelt ist, wobei der supraleitende Viertelwellenlängenwellenleiter mehrere Impedanzen aufweist; und
wobei das vollständig mikrowellenbasierte resonatorinduzierte Phasengatter dazu ausgebildet ist, den supraleitenden Viertelwellenlängenwellenleiter auf einer ersten Resonanzmode der Vielzahl von Resonanzmoden anzusteuern.

6. Einrichtung nach dem vorstehenden Anspruch, wobei eine Grundresonanz des supraleitenden Viertelwellenlängenwellenleiters unter einer Frequenz des ersten Qubits und einer Frequenz des zweiten Qubits liegt und wobei die Einrichtung die Vielzahl von Resonanzmoden aufweist, die sich so addieren, dass sie eine Kopplungsinteraktion zwischen dem ersten Qubit und dem zweiten Qubit aufheben; und/oder wobei das vollständig mikrowellenbasierte resonatorinduzierte Phasengatter die Kopplungsinteraktion zwischen dem ersten Qubit und dem zweiten Qubit fördert.

7. Einrichtung nach Anspruch 1:
wobei die Kopplungsstruktur einen supraleitenden Viertelwellenlängenwellenleiter (102b), der kapazitiv an das erste Qubit (104) und das zweite Qubit (106) gekoppelt ist, wobei der supraleitende Viertelwellenlängenwellenleiter mehrere Impedanzen aufweist; und
einen supraleitenden Halbwellenlängenwellenleiter (102a), der kapazitiv an das erste Qubit und das zweite Qubit gekoppelt ist, umfasst; und
wobei das vollständig mikrowellenbasierte resonatorinduzierte Phasengatter dazu ausgebildet ist, den supraleitenden Viertelwellenlängenwellenleiter oder den supraleitenden Halbwellenlängenwellenleiter auf einer ersten Resonanzmode der Vielzahl von Resonanzmoden anzusteuern.

8. Einrichtung nach dem vorstehenden Anspruch, weiter umfassend:
eine supraleitende Masseverbindung (402), die an den supraleitenden Viertelwellenlängenwellenleiter gekoppelt ist und diesen elektrisch auf Masse legt.

9. Einrichtung nach dem vorstehenden Anspruch, wobei der supraleitende Viertelwellenlängenwellenleiter und der supraleitende Halbwellenlängenwellenleiter beide an ein erstes kapazitives Pad (108) des ersten Qubits und an ein erstes kapazitives Pad (108) des zweiten Qubits gekoppelt sind; und/oder
wobei die Einrichtung die Vielzahl von Resonanzmoden aufweist, die sich so addieren, dass sie eine Kopplungsinteraktion zwischen dem ersten Qubit und dem zweiten Qubit aufheben; und/oder
wobei das vollständig mikrowellenbasierte resonatorinduzierte Phasengatter die Kopplungsinteraktion zwischen dem ersten Qubit und dem zweiten Qubit fördert.

10. Einrichtung nach Anspruch 5, weiter umfassend:
eine direkte kapazitive Kopplung zwischen dem ersten Qubit und dem zweiten Qubit.

11. Einrichtung nach dem vorstehenden Anspruch, wobei der supraleitende Viertelwellenlängenwellenleiter ein erstes Segment zwischen dem ersten Qubit und einem Kondensator (904) und ein zweites Segment zwischen dem Kondensator und dem zweiten Qubit aufweist und wobei die Einrichtung weiter eine supraleitende Masseverbindung umfasst, die an das erste Segment gekoppelt ist und dieses elektrisch auf Masse legt.

12. Einrichtung nach dem vorstehenden Anspruch, wobei die Einrichtung die Vielzahl von Resonanzmoden aufweist, die sich so addieren, dass sie eine Kopplungsinteraktion zwischen dem ersten Qubit und dem zweiten Qubit aufheben.

13. Verfahren, umfassend:
Koppeln einer Kopplungsstruktur (100) an ein erstes Qubit (104) und ein zweites Qubit (106), wobei die Kopplungsstruktur eine Vielzahl von Kopplungspfaden aufweist, wobei ein Kopplungspfad der Vielzahl von Kopplungspfaden ein Resonatorbus mit einem Übertragungsleitungs-Shunt (402) ist; wobei die Vielzahl von Kopplungspfaden eine Vielzahl von Resonanzmoden aufweist, die interferieren, um gemeinsam eine Kopplungsinteraktion zwischen dem ersten Qubit und dem zweiten Qubit zu unterdrücken; und
Herstellen eines vollständig mikrowellenbasierten resonatorinduzierten Phasengatters zwischen dem ersten Qubit und dem zweiten Qubit durch den Kopplungspfad.

## Revendications

1. Appareil, comprenant :
une structure de couplage (100) couplée à un premier bit quantique (104) et un deuxième bit quantique (106), la structure de couplage présentant une pluralité de trajets de couplage, dans lequel un trajet de couplage de la pluralité de trajets de couplage est un bus résonateur (102) avec une dérivation (402) de ligne de transmission, dans lequel la pluralité de trajets de couplage présentent une pluralité de modes de résonance qui interfèrent pour supprimer collectivement une interaction de couplage entre le premier bit quantique et le deuxième bit quantique,
et dans lequel le trajet de couplage établit une grille de phase induite par un résonateur à micro-ondes entre le premier bit quantique et le deuxième bit quantique.

2. Appareil selon la revendication précédente, dans lequel la dérivation de ligne de transmission comprend une connexion à la terre supraconductrice ; et/ou dans lequel le premier bit quantique est couplé à une première extrémité du bus résonateur, et dans lequel le deuxième bit quantique est couplé à un point le long d'une longueur du bus résonateur ; et/ou dans lequel le bus résonateur comprend un guide d'ondes coplanaire supraconducteur quart-d'onde avec plusieurs impédances.

3. Appareil, comprenant :
une structure de couplage (100) couplée à un premier bit quantique (104) et un deuxième bit quantique (106), la structure de couplage présentant une pluralité de trajets de couplage, dans lequel un trajet de couplage de la pluralité de trajets de couplage est un bus résonateur (102), dans lequel le premier bit quantique est couplé à une première extrémité du bus résonateur, et dans lequel le deuxième bit quantique est couplé à un point le long d'une longueur du bus résonateur,
dans lequel le trajet de couplage établit une grille de phase induite par un résonateur à micro-ondes entre le premier bit quantique et le deuxième bit quantique.

4. Appareil selon l'une quelconque des revendications précédentes, dans lequel la pluralité de trajets de couplage suppriment collectivement une interaction de couplage entre le premier bit quantique et le deuxième bit quantique ; et/ou
dans lequel le premier bit quantique et le deuxième bit quantique sont couplés au bus résonateur par l'intermédiaire d'au moins une technologie de couplage choisie dans le groupe consistant en couplage capacitif et couplage inductif ; et/ou dans lequel la structure de couplage comprend en outre un port d'attaque (206) ; et/ou dans lequel le bus résonateur est un bus résonateur passif.

5. Appareil selon la revendication 1 :
la structure de couplage comprenant un guide d'ondes (102) supraconducteur quart d'onde couplé de manière capacitive au premier bit quantique (104) et au deuxième bit quantique (106), dans lequel le guide d'ondes supraconducteur quart d'onde présente plusieurs impédances ; et dans lequel la grille de phase induite par un résonateur à micro-ondes est configurée pour attaquer le guide d'ondes supraconducteur quart d'onde dans un premier mode de résonance de la pluralité de modes de résonance.

6. Appareil selon la revendication précédente, dans lequel une résonance fondamentale du guide d'ondes supraconducteur quart d'onde est inférieure à une fréquence du premier bit quantique et à une fréquence du deuxième bit quantique, et dans lequel l'appareil présente la pluralité de modes de résonance qui s'ajoutent pour annuler une interaction de couplage entre le premier bit quantique et le deuxième bit quantique ; et/ou
dans lequel la grille de phase induite par un résonateur à micro-ondes favorise l'interaction de couplage entre le premier bit quantique et le deuxième bit quantique.

7. Appareil selon la revendication 1 :
la structure de couplage comprenant un guide d'ondes (102b) supraconducteur quart d'onde couplé de manière capacitive au premier bit quantique (104) et au deuxième bit quantique (106), dans lequel le guide d'ondes supraconducteur quart d'onde présente plusieurs impédances ; et
un guide d'ondes (102a) supraconducteur demi-onde couplé de manière capacitive au premier bit quantique et au deuxième bit quantique ; et
dans lequel la grille de phase induite par un résonateur à micro-ondes est configurée pour attaquer le guide d'ondes supraconducteur quart d'onde ou le guide d'ondes supraconducteur demi-onde dans un premier mode de résonance de la pluralité de modes de résonance.

8. Appareil selon la revendication précédente, comprenant en outre :
une connexion (402) à la terre supraconductrice qui est couplée au guide d'ondes supraconducteur quart d'onde et le met à la terre électriquement.

9. Appareil selon la revendication précédente, dans lequel le guide d'ondes supraconducteur quart d'onde et le guide d'ondes supraconducteur demi-onde sont tous deux couplés à un premier pavé capacitif (108) du premier bit quantique et à un premier pavé capacitif (108) du deuxième bit quantique ; et/ou
dans lequel l'appareil présente la pluralité de modes de résonance qui s'ajoutent pour annuler une interaction de couplage entre le premier bit quantique et le deuxième bit quantique ; et/ou
dans lequel la grille de phase induite par un résonateur à micro-ondes favorise l'interaction de couplage entre le premier bit quantique et le deuxième bit quantique.

10. Appareil selon la revendication 5, comprenant en outre :
un couplage capacitif direct entre le premier bit quantique et le deuxième bit quantique.

11. Appareil selon la revendication précédente, dans lequel le guide d'ondes supraconducteur quart d'onde présente un premier segment entre le premier bit quantique et un condensateur (904) et un deuxième segment entre le condensateur et le deuxième bit quantique, et dans lequel l'appareil comprend en outre une connexion à la terre supraconductrice qui est couplée au premier segment et le met à la terre électriquement.

12. Appareil selon la revendication précédente, dans lequel l'appareil présente la pluralité de modes de résonance qui s'ajoutent pour annuler une interaction de couplage entre le premier bit quantique et le deuxième bit quantique.

13. Procédé comprenant :
le couplage d'une structure de couplage (100) à un premier bit quantique (104) et un deuxième bit quantique (106), la structure de couplage présentant une pluralité de trajets de couplage, dans lequel un trajet de couplage de la pluralité de trajets de couplage est un bus résonateur avec une dérivation (402) de ligne de transmission, dans lequel la pluralité de trajets de couplage présentent une pluralité de modes de résonance qui interfèrent pour supprimer collectivement une interaction de couplage entre le premier bit quantique et le deuxième bit quantique, et
l'établissement d'une grille de phase induite par un résonateur à micro-ondes entre le premier bit quantique et le deuxième bit quantique par le trajet de couplage.
